# EUROPEAN PATENT SPECIFICATION

(11) **EP 4 235 931 B1**
(45) Date of publication and mention of the grant of the patent: **10.09.2025**
(21) Application number: 23156076.4
(22) Date of filing: 10.02.2023
(51) Int. Cl.: H01M 50/367, H01M 10/6556, H01M 10/613, H01M 10/647, H01M 10/6554, H01M 50/209, H01M 50/24, H01M 50/317, H01M 50/30

(54) **BATTERY PACK**
BATTERIEPACK
BLOC-BATTERIE

(30) Priority: 25.02.2022 JP 2022028190
(43) Date of publication of application: 30.08.2023
(73) Proprietor: Prime Planet Energy & Solutions, Inc., Chuo-ku Tokyo 103-0022 (JP)
(72) Inventor: EGASHIRA, Takuya, Tokyo, 103-0022 (JP)
(74) Representative: Kuhnen & Wacker Patent- und Rechtsanwaltsbüro PartG mbB

(56) References cited:
- EP-A1- 3 926 747
- DE-A1- 102012 214 818
- US-A1- 2021 226 281
- US-A1- 2022 013 856

## Description

### BACKGROUND OF THE INVENTION

### Field of the Invention

The present technology relates to a battery pack.

### Description of the Background Art

A battery pack having a case in which a plurality of battery cells are accommodated is described in each of Japanese Patent Laying-Open No. 2012-015121, Japanese Patent Laying-Open No. 2018-041614, US 2021/226281 A1, forming the basis for the preamble of claim 1,

EP 3 926 747 A1, and US 2022/013856 A1. In the battery pack described in Japanese Patent Laying-Open No. 2012-015121, a partition wall for partitioning inside of the case into a battery chamber and a gas-discharging chamber is provided.

### SUMMARY OF THE INVENTION

There is still room for improvement in a gas-discharging mechanism of the battery pack. For example, there are problems in terms of prevention of increase in manufacturing cost, prevention of excessive increase in size of the battery pack, and the like.

It is an object of the present technology to provide a battery pack having a gas-discharging function without increasing cost and size of the battery pack.

A battery pack according to the present technology includes: a plurality of battery cells arranged side by side along a first direction; and a case provided with an inner space for accommodating the plurality of battery cells. The case includes a structural member for securing strength of the case. The structural member includes a plate-shaped portion having a thickness. A discharging path through which a gas in the inner space is dischargeable is provided within the thickness of the plate-shaped portion so as to extend in an extending direction of the plate-shaped portion. The battery pack further comprises a sheet member having gas permeability, wherein the sheet member is provided over the discharging path so as to close the discharging path. The plate-shaped portion of the structural member includes a cooling plate that constitutes a bottom portion of the case. The discharging path is provided in the cooling plate. The cooling plate is provided with an entrance portion and an exit portion communicating with the discharge path. The discharge path communicates with the inner space of the case.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a battery cell included in a battery pack.
Fig. 2 is an external view of the battery pack.
Fig. 3 is a perspective view showing inside of a case.
Fig. 4 is a top view showing the inside of the case.
Fig. 5 is a diagram showing a cross section of a cooling plate.
Fig. 6 is an enlarged cross sectional view showing a discharging path for gas provided in the cooling plate.
Fig. 7 is a first enlarged cross sectional view showing a modification of the discharging path for gas.
Fig. 8 is a second enlarged cross sectional view showing a modification of the discharging path for gas.
Fig. 9 is a third enlarged cross sectional view showing a modification of the discharging path for gas.
Fig. 10 is a fourth enlarged cross sectional view showing a modification of the discharging path for gas.
Fig. 11 is a fifth enlarged cross sectional view showing a modification of the discharging path for gas.
Fig. 12 is a cross sectional perspective view showing a structure of a joined portion between the case and the cooling plate.
Fig. 13 is a diagram showing the cooling plate shown in Fig. 12 when viewed from the rear surface side.
Fig. 14 is a first top view showing an exemplary cooling plate in which a coolant path and the discharging path for gas are formed.
Fig. 15 is a second top view showing an exemplary cooling plate in which the coolant path and the discharging path for gas are formed.
Fig. 16 is a third top view showing an exemplary cooling plate in which the coolant path and the discharging path for gas are formed.
Fig. 17 is a fourth top view showing an exemplary cooling plate in which the coolant path and the discharging path for gas are formed.
Fig. 18 is a fifth top view showing an exemplary cooling plate in which the coolant path and the discharging path for gas are formed.
Fig. 19 is a sixth top view showing an exemplary cooling plate in which the coolant path and the discharging path for gas are formed.
Fig. 20 is a cross sectional view of a modification of the battery pack.
Fig. 21 is a cross sectional view showing a structure in the vicinity of an end portion of the battery pack shown in Fig. 20.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include another battery such as a nickel-metal hydride battery. In the present specification, the term "electrode" may collectively represent a positive electrode and a negative electrode. Further, the term "electrode plate" may collectively represent a positive electrode plate and a negative electrode plate.

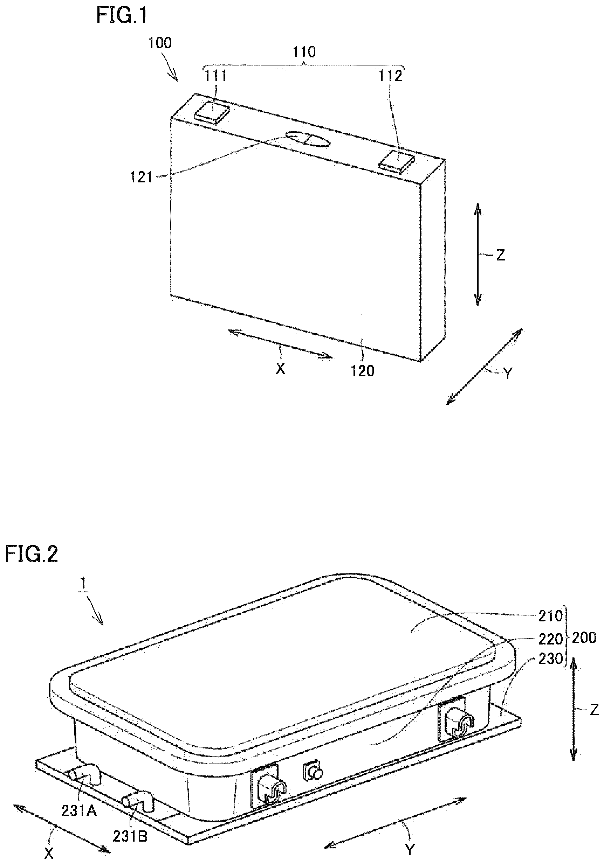

Fig. 1 is a diagram showing a battery cell 100 included in a battery pack according to the present embodiment. As shown in Fig. 1, battery cell 100 is formed to have a substantially rectangular parallelepiped shape with a flat surface. In the battery pack, battery cells 100 are stacked in a Y axis direction (first direction).

Electrode terminals 110 include a positive electrode terminal 111 and a negative electrode terminal 112. Positive electrode terminal 111 and negative electrode terminal 112 are arranged side by side in an X axis direction (second direction). Electrode terminals 110 are formed on the upper surface of a housing 120 having a prismatic shape.

Each of the upper surface and bottom surface of housing 120 facing each other along a Z axis direction (third direction) has a substantially rectangular shape in which the X axis direction corresponds to the long-side direction and the Y axis direction corresponds to the short-side direction. Housing 120 accommodates an electrode assembly and an electrolyte solution. A gas-discharge valve 121 is provided in the upper surface of housing 120. When pressure in housing 120 is increased, gas-discharge valve 121 is opened to discharge the gas in housing 120.

It should be noted that the battery cell according to the present technology is not limited to prismatic battery cell 100, and may be, for example, a cylindrical battery cell.

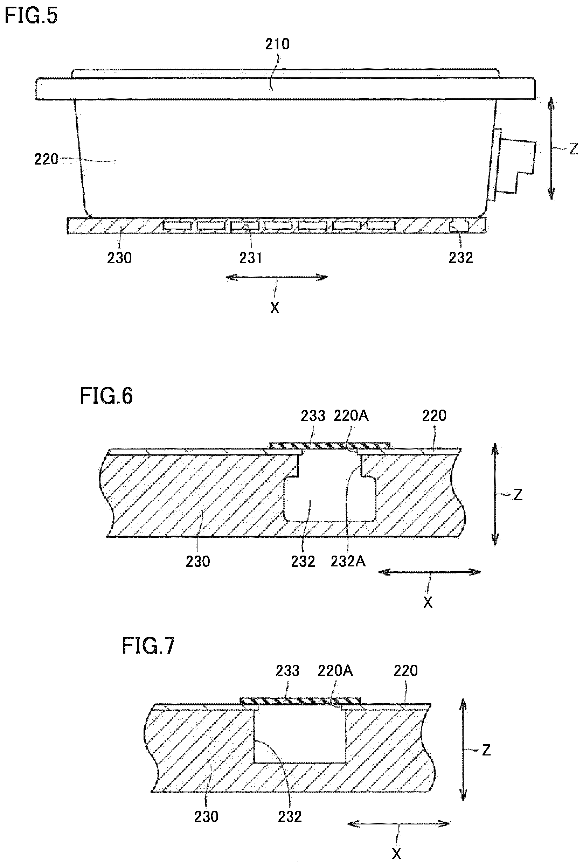

Fig. 2 is an external view of a battery pack 1. As shown in Fig. 2, battery pack 1 includes a case 200. Case 200 includes a cover 210, a main body 220, and a cooling plate 230. Cover 210, main body 220, and cooling plate 230 constitute a structural member for securing strength of case 200. Main body 220 may be a container having a bottom and the bottom portion of main body 220 may be integrated with cooling plate 230, or the bottom portion of main body 220 may be constituted of cooling plate 230. Cooling plate 230 has an entrance portion 231A and an exit portion 231B communicating with a coolant path 231 (see Fig. 5) formed in cooling plate 230.

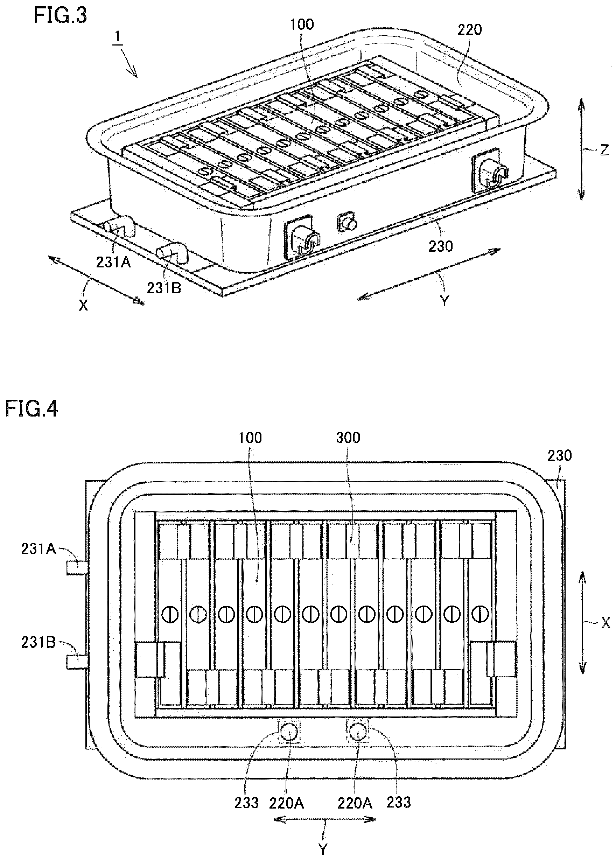

Fig. 3 is a perspective view showing inside of case 200, and Fig. 4 is a top view showing the inside of case 200. As shown in Figs. 3 and 4, a plurality of battery cells 100 are arranged side by side in an inner space of case 200. The plurality of battery cells 100 are arranged along the Y axis direction (first direction). The plurality of battery cells 100 are accommodated in the inner space of case 200 with the plurality of battery cells 100 being restrained in the Y axis direction. The plurality of battery cells 100 are electrically connected to each other by bus bars 300. Cooling plate 230 can be cooled by bringing cooling means such as a Peltier element into contact with cooling plate 230 without providing coolant path 231 in cooling plate 230.

Fig. 5 is a diagram showing a cross section of cooling plate 230. As shown in Fig. 5, cooling plate 230 (plate-shaped portion) constitutes a bottom portion of case 200. A coolant path 231 through which coolant flows and a discharging path 232 through which a gas in the inner space of case 200 can be discharged to outside of case 200 are formed inside cooling plate 230. Cooling plate 230 can be formed using an extrusion material, for example. Coolant path 231 and discharging path 232 are formed within the thickness of cooling plate 230 so as to extend in an extending direction of plate-shaped cooling plate 230. Therefore, coolant path 231 and discharging path 232 can be formed at the same time as forming cooling plate 230 by extrusion molding.

For example, when one of the plurality of battery cells 100 accommodated in case 200 undergoes thermal runaway, the gas inside housing 120 is discharged from gas-discharge valve 121 of battery cell 100 to increase the internal pressure of case 200. In battery pack 1 according to the present embodiment, discharging path 232 serving as a discharging path for gas is provided in cooling plate 230 serving as a structural member of case 200, with the result that the gas sent out upon the thermal runaway can be discharged from case 200 without additionally providing a safety valve even when battery pack 1 has a high capacity. Therefore, case 200 can have a gas-discharging function without increasing manufacturing cost and size of battery pack 1.

Further, the gas sent out from battery cell 100 when the internal pressure of case 200 is increased passes through discharging path 232 formed in cooling plate 230 and is then discharged to the outside of case 200, thereby facilitating cooling of the gas. Therefore, the temperature of the gas discharged from case 200 can be decreased.

Fig. 6 is an enlarged cross sectional view showing discharging path 232 for gas. Discharging path 232 shown in Fig. 6 is constituted of a hole formed by the extrusion molding upon the formation of cooling plate 230. A through hole 220A is formed at a bottom portion of main body 220 of case 200. Cooling plate 230 is provided with an entrance portion 232A communicating with discharging path 232. Through hole 220A and entrance portion 232A communicate with each other. Thus, discharging path 232 communicates with the inner space of case 200 via through hole 220A and entrance portion 232A.

Inside through hole 220A, a sheet member 233 (gas-permeable waterproof sheet) having gas permeability and waterproofness is provided. Sheet member 233 is provided to close entrance portion 232A of discharging path 232. Sheet member 233 is provided to face the inner space of case 200.

Sheet member 233 allows a gas to pass therethrough while blocking moisture (liquid). Sheet member 233 functions as a breather valve that reduces a pressure difference between the inside and outside of case 200 during a normal state. Sheet member 233 may be composed of a waterproof moisture-permeable material such as Gore-Tex (registered trademark), for example.

When the internal pressure of case 200 is increased, sheet member 233 is fractured or detached, with the result that gas and other objects sent out from battery cell 100 are discharged to the outside of case 200. By providing sheet member 233 at entrance portion 232A of discharging path 232, moisture and dust can be prevented from entering the inner space of case 200 (waterproof and dustproof) during the normal state without blocking the discharging of the gas from the inner space of case 200 via discharging path 232. Further, since discharging path 232 for gas upon the increase of the internal pressure can be used as the breather path for the normal state, the size and manufacturing cost (the number of components) of battery pack 1 can be reduced.

When cooling plate 230 is cooled, condensation is likely to occur at discharging path 232 formed in cooling plate 230. This leads to condensation of moisture (water vapor) in the vicinity of sheet member 233, with the result that the water vapor is suppressed from entering the inner space of case 200 to thereby effectively suppress occurrence of condensation in the inner space of case 200.

By providing sheet member 233 at the position facing the inner space of case 200, sheet member 233 can be suppressed from being damaged due to an external environment (for example, water pressure during high-pressure washing of the vehicle or the like). It should be noted that the installation position of sheet member 233 is not limited to the position facing the inner space of case 200, and may be provided to face the outside of case 200.

As a result, in battery pack 1 according to the present embodiment, occurrence of condensation in case 200 is suppressed.

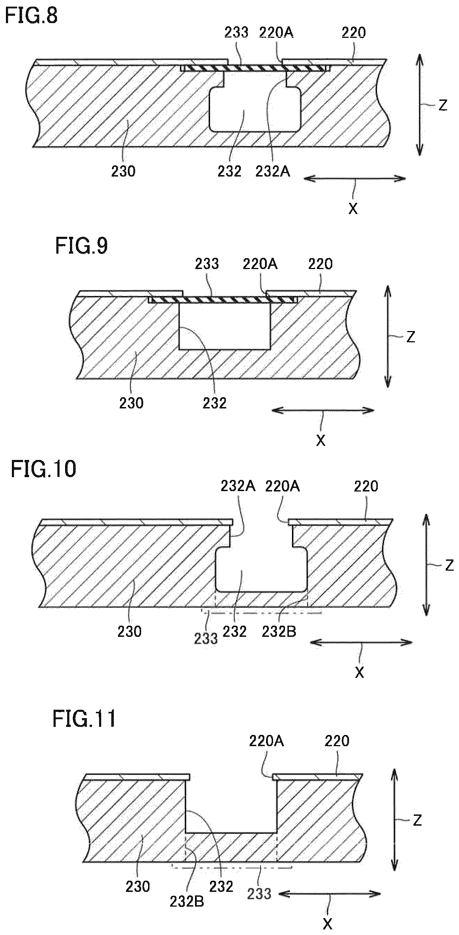

Each of Figs. 7 to 11 is a diagram showing a modification of the discharging path for gas. As shown in Fig. 7, discharging path 232 may be constituted of a groove that is opened at the upper surface of cooling plate 230. Further, as shown in Figs. 8 and 9, a sheet member 233 may be provided between the bottom portion of main body 220 of case 200 and cooling plate 230. Further, as shown in Figs. 10 and 11, an exit portion 232B of discharging path 232 may be formed to be opened on the rear surface side (side opposite to main body 220 of case 200) of cooling plate 230, and sheet member 233 may be provided outside exit portion 232B (on the rear surface of cooling plate 230).

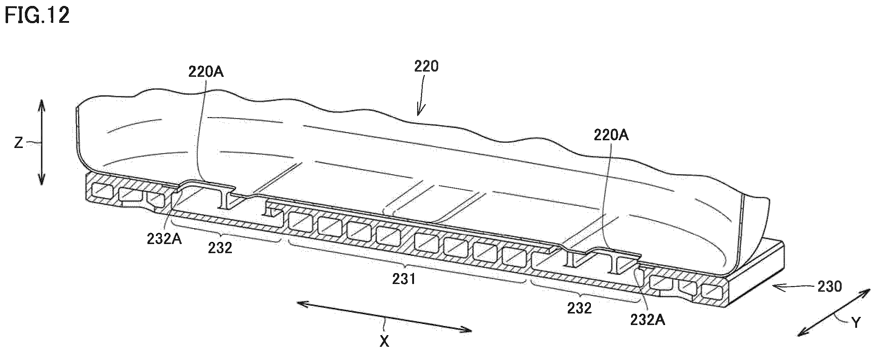

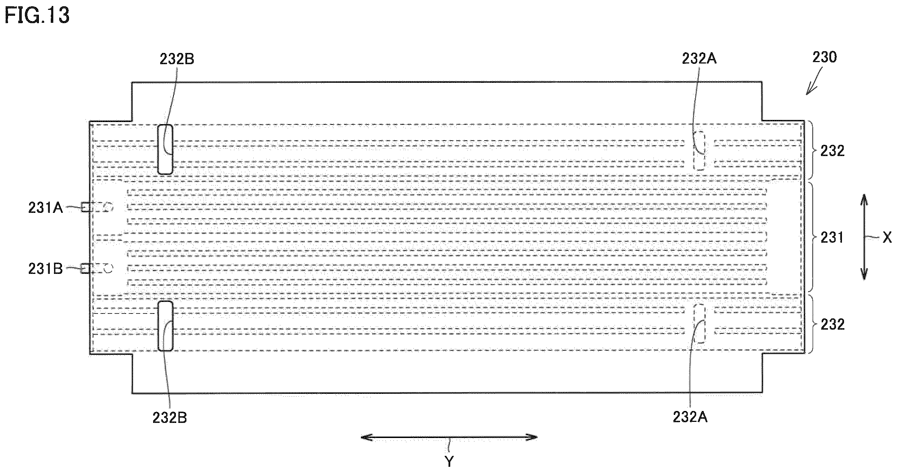

Fig. 12 is a cross sectional perspective view showing a structure of a joined portion between main body 220 of case 200 and cooling plate 230, and Fig. 13 is a diagram of cooling plate 230 shown in Fig. 12 when viewed from the rear surface side.

In the example shown in Figs. 12 and 13, discharging paths 232 are formed on both sides, in the X axis direction, with respect to coolant path 231 extending in the Y axis direction. Through hole 220A formed in the bottom portion of main body 220 of case 200 communicates with entrance portion 232A of each discharging path 232 formed in cooling plate 230, thereby communicating the inner space of case 200 and discharging path 232 with each other. Exit portion 232B of discharging path 232 is formed at a position away from entrance portion 232A in the Y axis direction. Exit portion 232B is provided to be opened on the rear surface side of cooling plate 230.

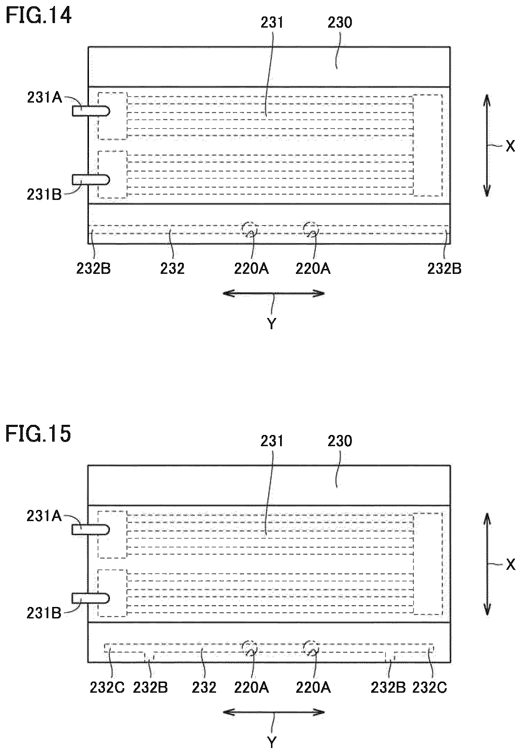

Each of Figs. 14 to 19 is a top view showing an exemplary cooling plate 230. As shown in Figs. 14 to 19, cooling plate 230 has a substantially quadrangular shape including a long side extending in the Y axis direction and a short side extending in the X axis direction. Coolant path 231 through which the coolant flows and discharging path 232 through which the gas is discharged extend along the Y axis direction.

In the example of Fig. 14, exit portions 232B of discharging path 232 are formed at both end portions of cooling plate 230 in the Y axis direction. By providing the plurality of exit portions 232B, an exit area of discharging path 232 can be increased. A flow path cross sectional area of discharging path 232 shown in Fig. 14 is, for example, about 200 mm² or more and 1500 mm² or less (preferably, about 400 mm² or more and 1000 mm² or less). A flow rate of the gas flowing through discharging path 232 upon the increase of the internal pressure of case 200 is, for example, about 200 liters/second or more (with continuity of about several seconds) at maximum. When the internal pressure of case 200 is increased, the gas is continuously discharged from discharging path 232 for, for example, ten several seconds to thirty seconds. It should be noted that the flow path cross sectional area of discharging path 232 and the flow rate of the gas are not limited to the above ranges.

Further, in the example of Fig. 14, one discharging path 232 is provided in cooling plate 230; however, the configuration of discharging path 232 is not limited thereto. A plurality of discharging paths 232 that do not communicate with each other may be provided in cooling plate 230, and an entrance portion 232A and an exit portion 232B may be provided for each of discharging paths 232. Thus, the gas flow rate can be further increased.

In each of the examples of Figs. 15 to 19, trap portions 232C communicating with discharging path 232 are formed. The tip of each trap portion 232C is closed. Trap portion 232C is formed within the thickness of cooling plate 230 so as to extend in the extending direction (X-Y plane direction) of cooling plate 230.

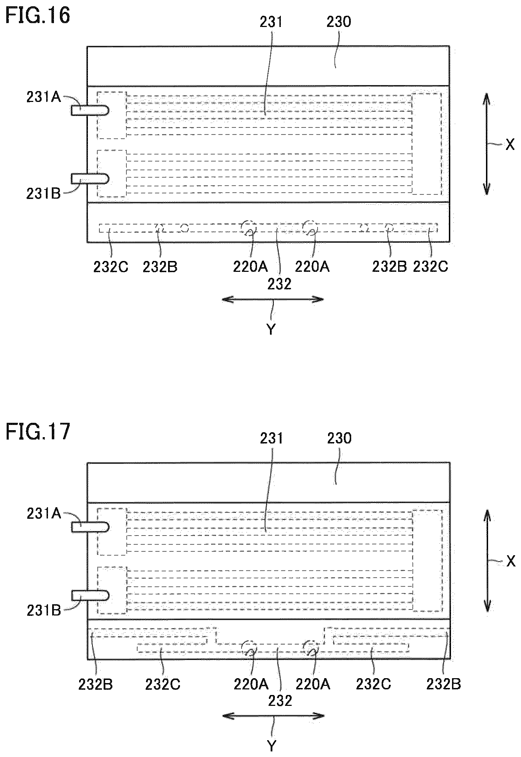

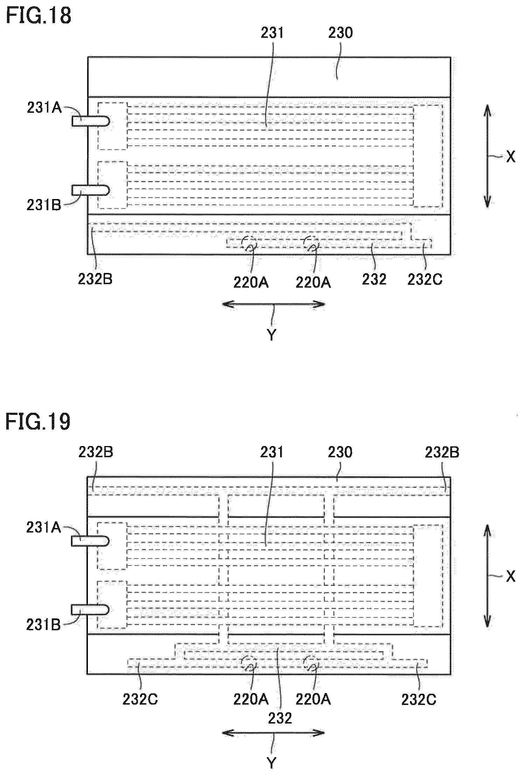

As shown in Fig. 15, exit portions 232B of discharging path 232 may be formed at both end portions of cooling plate 230 in the Y axis direction. As shown in Fig. 16, exit portions 232B of discharging path 232 may be formed in the rear surface of cooling plate 230. As shown in Fig. 17, a portion of discharging path 232 and trap portion 232C may extend in parallel with each other. As shown in Fig. 18, exit portion 232B may be formed only at one position. As shown in Fig. 19, portions of discharging path 232 may extend in the X axis direction to cross over coolant path 231 and reach the opposite side in the X axis direction.

As shown in the examples of Figs. 15 to 19, by providing discharging path 232 with the bent portion or trap portion 232C having a closed tip, a sent-out object or spark other than the gas generated from battery cell 100 that undergoes thermal runaway can be suppressed from being discharged from exit portion 232B.

According to battery pack 1 of the present embodiment, by providing discharging path 232 for gas within the thickness of cooling plate 230, the structural member of case 200 can have a function to serve as a discharging path for gas upon increase of internal pressure. This makes it possible to provide a gas-discharging function upon increase of internal pressure without increasing the manufacturing cost and the size of battery pack 1.

Further, exit portion 232B of discharging path 232 is also formed inside cooling plate 230, and a portion protruding to the outside of case 200 can be omitted.

It should be noted that the member in which discharging path 232 is formed is not necessarily limited to cooling plate 230, and discharging path 232 may be formed in a side surface of case 200.

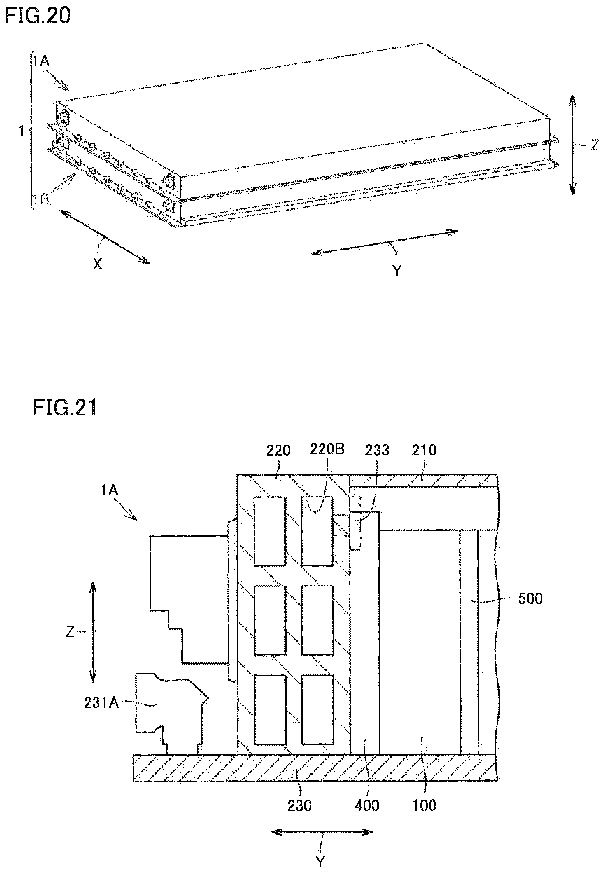

Fig. 20 is a cross sectional view of a modification of battery pack 1. In the present modification, as shown in Fig. 20, battery pack 1 is formed by stacking two battery packs 1A, 1B.

Fig. 21 is a cross sectional view showing a structure in the vicinity of an end portion of battery pack 1A. As shown in Fig. 21, an end plate 400 is provided at an end portion of a stack of battery cells 100. A separator 500 is provided between the plurality of battery cells 100.

In the present modification, main body 220 of case 200 is integrated with cooling plate 230. Main body 220 is provided with a breather path (not shown) for normal state and a sheet member 233. It should be noted that discharging path 232 for gas upon increase of the internal pressure may not be necessarily used as the breather path for the normal state.

Main body 220 may be constituted of the same member as that of cooling plate 230, or may be constituted of different members integrated by joining through welding or the like. In either case, a member that can be evaluated as being formed to be thermally integrated with cooling plate 230 should be interpreted as a member integrated with cooling plate 230.

A hole portion 220B is formed in main body 220. A gas having passed through sheet member 233 can be introduced into hole portion 220B. Further, the path formed in cooling plate 230 can be configured to communicate with hole portion 220B so as to freely adjust the position or direction of the exit portion of the path.

Also in the modification shown in Figs. 20 and 21, as with the case where sheet member 233 is provided on cooling plate 230, water vapor is suppressed from entering the inner space of case 200, thereby effectively suppressing occurrence of condensation in the inner space of case 200.

Although the embodiments of the present invention have been described and illustrated in detail, it is clearly understood that the same is by way of illustration and example only and is not to be taken by way of limitation, the scope of the present invention being interpreted by the terms of the appended claims.

## Claims

1. A battery pack comprising:
a plurality of battery cells (100) arranged side by side along a first direction; and
a case (200) provided with an inner space for accommodating the plurality of battery cells (100), wherein
the case (200) includes a structural member (210, 220, 230) for securing strength of the case (200),
the structural member (210, 220, 230) includes a plate-shaped portion (220, 230) having a thickness, and a discharging path (220B, 232) through which a gas in the inner space is dischargeable is provided within the thickness of the plate-shaped portion (220, 230) so as to extend in an extending direction of the plate-shaped portion (220, 230), **characterised in that**
the battery pack further comprises a sheet member (233) having gas permeability,
the sheet member (233) is provided over the discharging path (220B, 232) so as to close the discharging path (220B, 232),
the plate-shaped portion (220, 230) of the structural member (210, 220, 230) includes a cooling plate (230) that constitutes a bottom portion of the case (200),
the discharging path (232) is provided in the cooling plate (230),
the cooling plate (230) is provided with an entrance portion (232A) and an exit portion (232B) communicating with the discharge path (232), and
the discharge path (232) communicates with the inner space of the case (200).

2. The battery pack according to claim 1, wherein the sheet member (233) is provided to face the inner space.

3. The battery pack according to claim 1 or 2, wherein
the cooling plate (230) has a substantially quadrangular shape including a long side and a short side, and
the discharging path (232) includes a portion extending in a direction along the long side.

4. The battery pack according to any one of claims 1 to 3, wherein
a coolant path (231) is provided inside the cooling plate (230), and
the discharging path (232) includes a portion extending in a direction along the coolant path (231).

5. The battery pack according to any one of claims 1 to 4, wherein a trap portion (232C) that communicates with the discharging path (232) and that has a closed tip is provided within the thickness of the plate-shaped portion (230) so as to extend in the extending direction of the plate-shaped portion (230).

## Patentansprüche

1. Batteriepack, aufweisend:
eine Mehrzahl an Batteriezellen (100), die entlang einer ersten Richtung nebeneinander angeordnet sind; und
ein Gehäuse (200), das einen Innenraum zum Aufnehmen der Mehrzahl an Batteriezellen (100) beinhaltet, wobei
das Gehäuse (200) ein Strukturelement (210, 220, 230) zum Gewährleisten der Stärke des Gehäuses (200) beinhaltet,
wobei das Strukturelement (210, 220, 230) einen plattenförmigen Abschnitt (220, 230) mit einer Dicke beinhaltet, und ein Entladungspfad (220B, 232), durch den ein Gas in dem Innenraum entladen werden kann, innerhalb der Dicke des plattenförmigen Abschnitts (220, 230) vorhanden ist, so dass er in einer Verlaufsrichtung des plattenförmigen Abschnitts (220, 230) verläuft,
**dadurch gekennzeichnet, dass**
das Batteriepack ferner ein Blechelement (233) mit einer Gaspermeabilität aufweist,
das Blechelement (233) sich über dem Entladungspfad (220B, 232) befindet, so dass der Entladungspfad (220B, 232) abgeschlossen ist,
der plattenförmige Abschnitt (220, 230) des Strukturelements (210, 220, 230) eine Kühlungsplatte (230) beinhaltet, die einen Bodenabschnitt des Gehäuses (200) darstellt,
der Entladungspfad (232) sich in der Kühlungsplatte (230) befindet,
die Kühlungsplatte (230) mit einem Eingangsabschnitt (232A) und einem Ausgangsabschnitt (232B) versehen ist, die mit dem Entladungspfad (232) kommunizieren, und
der Entladungspfad (232) mit dem Innenraum des Gehäuses (200) kommuniziert.

2. Batteriepack nach Anspruch 1, wobei das Blechelement (233) so angeordnet ist, dass es dem Innenraum zugewandt ist.

3. Batteriepack nach Anspruch 1 oder 2, wobei
die Kühlungsplatte (230) eine im Wesentlichen viereckige Form mit einer langen Seite und einer kurzen Seite aufweist, und
der Entladungspfad (232) einen Abschnitt beinhaltet, der in einer Richtung entlang der langen Seite verläuft.

4. Batteriepack nach einem der Ansprüche 1 bis 3, wobei
ein Kühlmittelpfad (231) sich im Inneren der Kühlungsplatte (230) befindet, und
der Entladungspfad (232) einen Abschnitt beinhaltet, der in einer Richtung entlang des Kühlmittelpfads (231) verläuft.

5. Batteriepack nach einem der Ansprüche 1 bis 4, wobei ein Klappenabschnitt (232C), der mit dem Entladungspfad (232) kommuniziert und der eine geschlossene Spitze aufweist, sich innerhalb der Dicke des plattenförmigen Abschnitts (230) befindet, so dass er in der Verlaufsrichtung des plattenförmigen Abschnitts (230) verläuft.

## Revendications

1. Un bloc-batterie comprenant :
une pluralité de cellules de batterie (100) disposées côte à côte dans une première direction ; et
un boîtier (200) muni d'un espace intérieur destiné à loger la pluralité de cellules de batterie (100), dans lequel
le boîtier (200) comprend un élément structurel (210, 220, 230) pour assurer la résistance du boîtier (200),
l'élément structurel (210, 220, 230) comprend une partie en forme de plaque (220, 230) ayant une épaisseur, et un chemin de décharge (220B, 232) à travers lequel un gaz dans l'espace intérieur peut être évacué est prévu à l'intérieur de l'épaisseur de la partie en forme de plaque (220, 230) de manière à s'étendre dans une direction d'extension de la partie en forme de plaque (220, 230), **caractérisé en ce que**
le bloc-batterie comprend en outre un élément en feuille (233) ayant une perméabilité aux gaz,
l'élément en feuille (233) est prévu sur le chemin de décharge (220B, 232) de manière à fermer le chemin de décharge (220B, 232),
la partie en forme de plaque (220, 230) de l'élément structurel (210, 220, 230) comprend une plaque de refroidissement (230) qui constitue une partie inférieure du boîtier (200),
le chemin de décharge (232) est prévu dans la plaque de refroidissement (230),
la plaque de refroidissement (230) est pourvue d'une partie d'entrée (232A) et d'une partie de sortie (232B) communiquant avec le chemin de décharge (232), et
le chemin de décharge (232) communique avec l'espace intérieur du boîtier (200).

2. Le bloc-batterie selon la revendication 1, dans lequel l'élément en feuille (233) est prévu pour faire face à l'espace intérieur.

3. Le bloc-batterie selon la revendication 1 ou 2, dans lequel
la plaque de refroidissement (230) a une forme sensiblement quadrangulaire comprenant un côté long et un côté court, et
le chemin de décharge (232) comprend une partie s'étendant dans une direction le long du côté long.

4. Le bloc-batterie selon l'une des revendications 1 à 3, dans lequel
un chemin de refroidissement (231) est prévu à l'intérieur de la plaque de refroidissement (230), et
le chemin de décharge (232) comprend une partie s'étendant dans une direction le long du chemin de refroidissement (231).

5. Le bloc-batterie selon l'une des revendications 1 à 4, dans lequel une partie de piégeage (232C) qui communique avec le chemin de décharge (232) et qui présente une extrémité fermée est prévue à l'intérieur de l'épaisseur de la partie en forme de plaque (230) de manière à s'étendre dans la direction d'extension de la partie en forme de plaque (230).
